# EUROPEAN PATENT APPLICATION

(11) **EP 3 998 475 A1**
(43) Date of publication of application: **18.05.2022**
(21) Application number: 20836954.6
(22) Date of filing: 27.04.2020
(51) Int. Cl.: G01N 21/94, G01N 21/88, G01S 7/497, G01S 17/00

(54) **STAIN DETECTION DEVICE AND LASER RADAR**

(30) Priority: 09.07.2019 CN 201921058009 U
(71) Applicant: Hangzhou Ole-Systems Co., Ltd., Hangzhou, Zhejiang 310016 (CN)
(72) Inventor: ZHANG, Ou, Hangzhou, Zhejiang 310016 (CN); ZHU, Yaping, Hangzhou, Zhejiang 310016 (CN)
(74) Representative: Lambsdorff & Lange Patentanwälte Partnerschaft mbB
(86) International application number: PCT/CN2020/087100
(87) International publication number: WO 2021/004135

(57) **Abstract**

The present utility model provides a stain detection device and a laser radar. The stain detection device is applied to a window cover and comprises a signal emitting unit provided at a first side of the window cover; a first receiving unit provided at the first side of the window cover for receiving signal sent by the signal emitting unit and without passing through the window cover; a second receiving unit provided at a second side of the window cover for receiving signal sent by the signal emitting unit and passing through the window cover; and a processing unit connected to the first receiving unit and the second receiving unit for comparing the signals received by the first receiving unit with that of the second receiving unit so as to judge whether there is a stain on the surface of the window cover. By adopting the aforementioned technical solution, the present utility model is capable of detecting the presence of stains on the surface of the window cover effectively, such that timely cleaning can be performed, thereby avoiding adverse effects caused by the stains.

## Description

### TECHNICAL FIELD

The present utility model relates to the field of stain detection, and in particular to a stain detection device and a laser radar.

### BACKGROUND

Usually, a laser radar in the prior art has a structure that a window cover is provided at the periphery of a emitting module and a receiving module for protecting the chip therein and resisting water and dust at the same time. The laser light emitted by the emitting module of the laser radar passes through the window cover and projects onto a target object, and in turn the laser light reflected from the target object passes through the window cover and is received by the receiving module. The window cover can be a glass lens or a light-transmissible plastic shield. Since a radar works generally featured with long-time scanning and monitoring without human assistance, if there is any stain on the surface of the window cover during working, it will affect the accuracy of scanning result of the radar, and even cause the radar to work abnormally. In addition, it is difficult to find the appearance of a stain and deal with it in time.

Therefore, it is necessary to develop a stain detection device capable of timely and effectively detecting the presence of stains on the surface of the window cover, and a laser radar with the stain detection device.

### SUMMARY

For overcoming the aforementioned technical deficience, the objective of the present utility model is to provide a stain detection device capable of timely and effectively detecting the presence of stains on the surface of the window cover, and a laser radar with the stain detection device.

The present utility model discloses a stain detection device applied to a window cover, wherein it comprises:
a signal emitting unit provided at a first side of the window cover;
a first receiving unit provided at the first side of the window cover for receiving signal sent by the signal emitting unit and without passing through the window cover;
a second receiving unit provided at a second side of the window cover for receiving signal sent by the signal emitting unit and passing through the window cover; and
a processing unit connected to the first receiving unit and the second receiving unit for judging whether there is a stain on the surface of the window cover according to the signals received by the first receiving unit and the second receiving unit.

Preferably, the position of the first receiving unit at the first side of the window cover corresponds to the position of the second receiving unit at the second side of the window cover.

Preferably, the signal emitting unit is an infrared-signal emitting unit;
the first receiving unit and the second receiving unit are infrared-signal receiving units.

Preferably, the infrared-signal emitting unit comprises at least one infrared emitting diode;
each of the first receiving unit and the second receiving unit comprises at least one infrared receiving diode.

Preferably, the processing unit is a single-chip microcomputer.

Preferably, the stain detection device further comprises a reminding unit connected to the processing unit for sending reminder information according to the judgment from the processing unit.

Preferably, the reminding unit comprises a loudspeaker and/or a signal light.

Preferably, the stain detection device further comprises a cleaning unit connected to the processing unit for removing stains on the window cover.

Preferably, the cleaning unit comprises a scraping assembly and/or a rinsing assembly.

The present utility model also discloses a laser radar comprising a housing and a window cover, wherein the housing and the window cover together form a closed space, the laser radar has a laser-light emitting module and a laser-light receiving module provided in the closed space, and the laser radar comprises the aforementioned stain detection device;
the signal emitting unit and the first receiving unit are provided at the inner side of the closed space; and
the second receiving unit is provided at the outer side of the closed space.

By adopting the aforementioned technical solution, the present utility model, compared with the prior art, has advantages as follows:
1. it is capable of detecting the presence of stains on the surface of the window cover effectively, such that a reminder can be sent or measures can be taken in time, thereby avoiding adverse effects caused by the stains.
2. the technical solution thereof is simple and easy to implement, and has low cost.

### BRIEF DESCRIPTION OF THE DRAWINGS

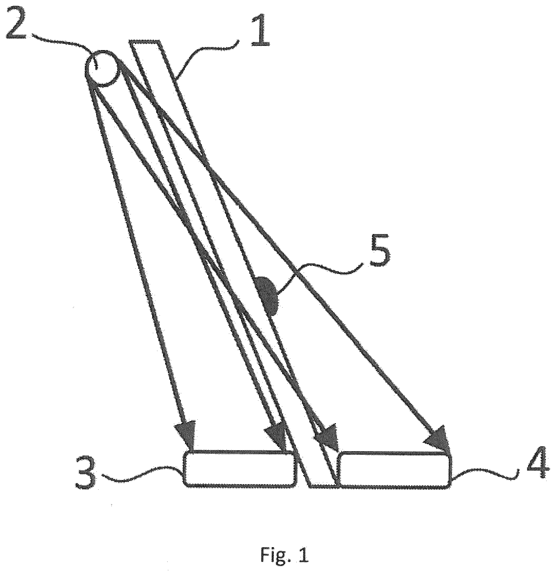

Fig.1 is a schematic structural view of a stain detection device in an embodiment of the present utility model.

### Reference numerals:

1-window cover, 2-signal emitting unit, 3-first receiving unit, 4-second receiving unit,
5- stain.

### DETAILED DESCRIPTION

Hereinafter the advantages of the present utility model will be further set out in conjunction with the accompanying drawings and specific embodiments.

Herein, exemplary embodiments will be described in detail, an example of which is shown in the accompanying drawings. When the following description refers to the drawings, unless otherwise indicated, the same numbers in different drawings indicate the identical or similar element. The implementation manners described in the following exemplary embodiments do not represent all the ones consistent with the present disclosure. Rather, they are merely examples of devices and methods consistent with some aspects of the present disclosure as detailed in the appended claims.

The terms used in the present disclosure are only for describing specific embodiments, but not intended to limit the present disclosure. The singular forms of "a", "said" and "the" used in the present disclosure and appended claims are also intended to include plural forms, unless another meaning is clearly indicated in context. It should also be understood that the term "and/or" as used herein refers to and includes any or all possible combinations of one or more listed associated items.

It should be understood that in spite of probably using the terms "first", "second", "third", etc. in this disclosure to describe all kinds of information, the information should not be limited to these terms. These terms are only used for distinguishing the same kind of information from each other. For example, without departing from the scope of the present disclosure, first information may also be referred to as second information, and similarly, second information may also be referred to as first information. Depending on the context, the word "if" used herein can be interpreted as "when", "while" or "upon".

In the description of the present utility model, it should be understood that the orientation or positional relationships indicated by terms "longitudinal", "horizontal", "upper", "lower", "front", "rear", "left", "right", "vertical" , "horizontal", "top", "bottom", "inner", "outer", etc. is based on that shown in the drawing, which is only for conveniently and simply describing the utility model. It does not indicate or imply that the referred device or element must have a specific orientation, or be constructed and operated in a specific orientation, therefore the terms should not be understood as a limitation to the present utility model.

In the description of the present utility model, unless otherwise specified and limited, it should be noted that the terms "install", "connect" and "communicate" should be understood in a broad sense, for example, it can be mechanical connection, electrical connection, or internal communication between two elements, and it also can be direct connection, or indirect connection by an intermediate medium. For those skilled in the art, the specific meaning of the above-mentioned terms can be understood according to specific circumstances.

In the following description, terms such as "module", "component", "unit", for indicating elements are only used for the convenience of describing the present utility model, and have no specific meaning themselves. Therefore, "module" and "component" can be used interchangeably.

Referring to FIG. 1, it is a schematic structural view of a stain detection device in an embodiment of the present utility model, wherein the stain detection device is applied to a window cover 1. The window cover 1 herein could refer to a glass window, such as a glass window of a house, a car window, etc., and could also refer to a housing cover or a shield of an apparatus. Preferably, the stain detection device is applied to a window cover of a laser radar. The material of the window cover 1 could be glass or plastic. Preferably, the window cover is light-transmissible.

The stain detection unit comprises:
- a signal emitting unit 2

The signal emitting unit 2 is provided at the first side of the window cover 1. The signal emitting unit 2 could be an optical-signal emitting unit. In this embodiment, the signal emitting unit 2 is an infrared-signal emitting unit. The infrared-signal emitting unit includes at least one infrared emitting diode for directly converting electrical energy into near-infrared light (that is, invisible light) and radiating it. The signal emitting unit 2 is preferably provided at the side of the window cover 1 which is not prone to stains. For example, when the window cover 1 is an housing cover or a shield of an apparatus, the signal emitting unit 2 is usually provided at the inner side of the apparatus. In some embodiments, the signal emitting unit 2 could be a sound-signal emitting unit, such as an ultrasonic-signal emitting unit.
- a first receiving unit 3

The first receiving unit 3 is provided at the first side of the window cover 1 for receiving signal sent by the signal emitting unit 2 and without passing through the window cover 1. The first receiving unit 3 is provided at the same side of the window cover 1 as the signal emitting unit 2, for receiving signal sent by the signal emitting unit 2 and without passing through the window cover 1, which is directly emitted onto the first receiving unit 3. In this embodiment, the first receiving unit 3 is an infrared-signal receiving unit. The first receiving unit 3 includes at least one infrared receiving diode for converting the received infrared light signal into electrical signal, and the electrical signal varies correspondingly with the intensity of the infrared light within a certain range. The infrared receiving diode could be a photodiode or a phototriode.
- a second receiving unit 4

The second receiving unit 4 is provided at the second side of the window cover 1 for receiving signal sent by the signal emitting unit 2 and passing through the window cover 1. The second receiving unit 4 and the signal emitting unit 2 are arranged at different sides of the window cover 1, thus the signal sent by the signal emitting unit 2 could be received by the receiving unit 4 only when it passes through the window cover 1. In this embodiment, the second receiving unit 4 is an infrared-signal receiving unit. The second receiving unit 4 includes at least one infrared receiving diode. The infrared receiving diode is used for converting the received infrared light signal into an electrical signal, and the electrical signal varies correspondingly with the intensity of the infrared light within a certain range. The infrared receiving diode could be a photodiode or a phototriode. Preferably, the position of the first receiving unit 3 at the first side of the window cover 1 corresponds to the position of the second receiving unit 4 at the second side of the window cover 1, that is, the positions of the first receiving unit 3 and the second receiving unit 4 are equivalently symmetrical with respect to the window cover 1. Preferably, the signal emitting unit 2 and the second receiving unit 4 are provided at different positions at the opposite sides of the window cover 1. It can be understood that the greater the distance between the positions of the signal emitting unit 2 and the second receiving unit 4 is, the larger the range in which the signal passes through the window cover 1 (that is, the range of stain detection) becomes. In this embodiment, the signal emitting unit 2 is provided at the upper end of the first side of the window cover 1, while the second receiving unit 4 is provided at the lower end of the second side of the window cover 1. In some embodiments, the signal emitting unit 2 and the second receiving unit 4 could be respectively provided at left and right ends of opposite sides of the window cover 1, and specifically, they could be flexibly provided as required. Further, corresponding to one signal emitting unit 2, a plurality of second receiving units 4 could be arranged in different positions at the opposite side of the window cover 1, thereby enlarging the range in which the signal passes through the window cover 1 (that is, the range of stain detection).
- a processing unit

The processing unit is connected to the first receiving unit 3 and the second receiving unit 4 for judging whether there is a stain on the surface of the window cover 1 according to the signal received by the first receiving unit 3 and the second receiving unit 4. In this embodiment, the processing unit is a single-chip microcomputer connected to the first receiving unit 3 and the second receiving unit 4. When there is no stain on the surface of the window cover 1, the first receiving unit 3 and the second receiving unit 4 receive the infrared signal sent by the signal emitting unit 2, and a ratio between the intensity of the signals received by the first receiving unit 3 and the second receiving unit 4 is obtained. In this case, owing to that there is no stain on the surface of the window cover 1, and considering that the signal get attenuated when passing through the window cover 1, the ratio between the intensity of the signals received by the first receiving unit 3 and the second receiving unit 4 would be a value close to 1. When there is a stain 5 on the surface of the window cover 1, the stain 5 blocks the infrared signal sent by the signal emitting unit 2, resulting in that the intensity of the signal received by the second receiving unit 4 is subjected to a significant reduction. Correspondingly, the ratio between the intensity of the signals received by the first receiving unit 3 and the second receiving unit 4 is also subjected to a significant change. Therefore, a threshold can be set for determining the existence of a stain on the surface of the window cover 1 when the ratio between the intensity of the signals received by the first receiving unit 3 and the second receiving unit 4 changes to meet the threshold.

Preferably, the stain detection device further conmprises:
- a reminding unit

The reminding unit is connected to the processing unit for sending reminder information according to the judgment from the processing unit. Specifically, the reminding unit could include a loudspeaker and/or a signal light. When a stain on the surface of the window cover is detected by the processing unit, the reminding unit can send a sound reminder via the loudspeaker, and/or a light reminder via the signal light, such that the user can be informed of the presence of the stain in time. Hence, the user can clean up the stain in time to prevent adverse effects caused by it.

Preferably, the stain detection device further includes:
- a cleaning unit

The cleaning unit is connected to the processing unit for removing stains on the window cover. Specifically, the cleaning unit could include a scraping assembly and/or a rinsing assembly. The scraping assembly could include a motor and a scraper (wiper), and when a stain on the surface of the window cover is detected, the scraper (wiper) could be driven by the motor to move so as to scrape the stain from the surface of the window cover. The rinsing assembly may include a spray head, and when a stain on the surface of the window cover is detected, it sprays water or cleaning liquid to rinse the stain so as to remove it. The scraping assembly and the rinsing assembly can be used in combination to achieve a better decontamination effect.

The utility model also discloses a laser radar including a housing and a window cover. The housing and the window cover together form a closed space. The laser radar has a laser-light emitting module and a laser-light receiving module provided in the closed space. Laser light emitted by the laser-light emitting module passes through the window cover and projects onto a target object, and in turn, the laser light reflected from the target object passes through the window cover and is received by the laser-light receiving module. The laser radar includes the above-mentioned stain detection device. The signal emitting unit and the first receiving unit are provided at the inner side of the closed space, while the second receiving unit is provided at the outer side of the closed space. Preferably, the housing of the laser radar is provided with an installation structure for installing the first receiving unit and the second receiving unit .

The laser radar of the present application is capable of detecting the presence of stains on the surface of the window cover timely and effectively by providing a stain detection device at the window cover, so as to remove the stains automatically or remind the user to remove the stains, thereby avoiding that the stains affect the scanning result of the laser radar and ensuring that the radar can work accurately for a long period of time. The technical solution of the present application is simple and easy to implement, and has low cost and high economic benefits.

It should be noted that the embodiments of the present utility model are of good operability, but not for constituting any limitation to the protection scope thereof. Any person skilled in the art can make alterations or modifications to the embodiments by the aforementioned technical contents, to form an equivalent and effective embodiment. Any amendments, equivalent changes and modifications to the above-mentioned embodiments based on the technical essence of the present utility model and without departing from the technical solutions of the present utility model, shall belong to the scope defined by the technical solutions of the present utility model.

## Claims

1. A stain detection device, applied to a window cover, **characterized in that**, comprises:
a signal emitting unit provided at a first side of the window cover;
a first receiving unit provided at the first side of the window cover for receiving signal sent by the signal emitting unit and without passing through the window cover;
a second receiving unit provided at a second side of the window cover for receiving signal sent by the signal emitting unit and passing through the window cover; and
a processing unit connected to the first receiving unit and the second receiving unit for judging whether there is a stain on the surface of the window cover according to the signals received by the first receiving unit and the second receiving unit.

2. The stain detection device according to Claim 1, wherein
the position of the first receiving unit at the first side of the window cover corresponds to the position of the second receiving unit at the second side of the window cover.

3. The stain detection device according to Claim 1, wherein
the signal emitting unit is an infrared-signal emitting unit; and
the first receiving unit and the second receiving unit are infrared-signal receiving units.

4. The stain detection device according to Claim 3, wherein
the infrared-signal emitting unit comprises at least one infrared emitting diode; and
each of the first receiving unit and the second receiving unit comprises at least one infrared receiving diode.

5. The stain detection device according to Claim 1, wherein
the processing unit is a single-chip microcomputer.

6. The stain detection device according to Claim 1, wherein
the stain detection device further comprises a reminding unit connected to the processing unit for sending reminder information according to the judgment from the processing unit.

7. The stain detection device according to Claim 6, wherein
the reminding unit comprises a loudspeaker and/or a signal light.

8. The stain detection device according to Claim 1, wherein
the stain detection device further comprises a cleaning unit connected to the processing unit for removing stains on the window cover.

9. The stain detection device according to Claim 8, wherein
the cleaning unit comprises a scraping assembly and/or a rinsing assembly.

10. A laser radar, comprising a housing and a window cover, the housing and the window cover together forms a closed space, and the laser radar has a laser-light emitting module and a laser-light receiving module provided in the closed space, wherein
the laser radar comprises the stain detection device according to any one of Claims 1 to 9;
the signal emitting unit and the first receiving unit are provided at the inner side of the closed space; and
the second receiving unit is provided at the outer side of the closed space.
